# EUROPEAN PATENT APPLICATION

(11) **EP 3 006 772 A1**
(43) Date of publication of application: **13.04.2016**
(21) Application number: 14803993.6
(22) Date of filing: 27.05.2014
(51) Int. Cl.: F16F 15/04, C08K 3/04, C08K 3/22, C08K 3/28, C08L 67/00, C08L 93/04, C08L 101/00, F16F 1/40

(54) **DAMPING MATERIAL, VIBRATION-DAMPING MEMBER USING SAID DAMPING MATERIAL, AND SEISMIC ISOLATOR INTO WHICH SAID VIBRATION-DAMPING MEMBER HAS BEEN INCORPORATED**

(30) Priority: 30.05.2013 JP 2013114724; 18.11.2013 JP 2013238066
(71) Applicant: OILES CORPORATION, Tokyo 108-0075 (JP)
(72) Inventor: WAKE, Tomotaka, Ashikaga-shi Tochigi 326-0327 (JP); ISHIKAWA, Keizou, Ashikaga-shi Tochigi 326-0327 (JP); MIYASAKA, Kingo, Fujisawa-shi Kanagawa 252-0811 (JP)
(74) Representative: Jackson, Martin Peter
(86) International application number: PCT/JP2014/002788
(87) International publication number: WO 2014/192289

(57) **Abstract**

A vibration isolation apparatus 1 includes: an annular laminated elastic body 6 in which elastic material layers formed of elastic plates 2 and rigid material layers formed of a plurality of annular thin-walled rigid steel plates 3 and a pair of annular thick-walled rigid steel plates 4 and 5 are alternately laminated; a cylindrical plug 9 formed of a vibration damping material and disposed densely in a cylindrical hollow portion 8 defined by at least an inner peripheral surface 7 of the laminated elastic body 6; upper and lower flange plates 12 and 11 respectively connected to the thick-walled rigid steel plates 4 and 5 by bolts 10; and a pair of annular shear keys 13 for each fixing each of the upper and lower flange plates 12 and 11 and a corresponding one of the thick-walled rigid steel plates 4 and 5 to each other at each of a lower surface and an upper surface of the cylindrical plug 9.

## Description

### TECHNICAL FIELD

The present invention relates to a damping material suitable for use in a vibration damping member incorporated in a seismic isolation apparatus or the like having a laminated elastic body, a vibration damping member using the damping material, and a seismic isolation apparatus incorporating the vibration damping member.

### BACKGROUND ART

As is known in Patent Documents 1 and 2, a seismic isolation apparatus including a laminated elastic body, in which elastic material layers and rigid material layers are alternately laminated, and a lead plug filled in a cylindrical hollow portion defined by an inner peripheral surface of the laminated elastic body, is installed between the ground and a structure such that after the load of the structure is supported, the transmission of the ground vibrations to the structure due to an earthquake or the like is prevented as practically as possible by the laminated elastic body, and the vibrations transmitted to the structure are attenuated as speedily as possible by the lead plug.

Such a lead plug used in the seismic isolation apparatus extremely excels as a vibrational energy absorbing body since the lead plug satisfactorily absorbs vibrational energy, is easily recrystallized by heat generated in conjunction with the absorption of vibrational energy even after plastic deformation, and does not cause mechanical fatigue.

### PRIOR ART DOCUMENTS

### PATENT DOCUMENTS

Patent Document 1: JP-A-1997-105440
Patent Document 2: JP-A-2000-346132
Patent Document 3: JP-A-2009-133481

### SUMMARY OF THE INVENTION

### PROBLEMS THAT THE INVENTION IS TO SOLVE

However, since the specific gravity of lead is extremely large, as is well known, with the laminated elastic body and the seismic isolation apparatus incorporating the lead plug, there are problems in that extremely large labor is required for their transportation to an installation site and their installation to the structure, and that it is impossible to obtain the bearing pressure dependence, i.e., the characteristic of being able to exhibit a vibration isolating effect corresponding to structures different in the load which is supported by the seismic isolation apparatus.

Patent Document 3 proposes a seismic isolation apparatus incorporating a plug fabricated from a composition in which a powder such as iron powder is compounded in an elastomer composition. Even in such a seismic isolation apparatus, however, consideration is not paid to the bearing pressure dependence.

The present invention has been devised in view of the above-described aspects, and its object is to provide a damping material suitable for use in a vibration damping member, a vibration damping member using the damping material, and a seismic isolation apparatus incorporating the vibration damping member.

### MEANS FOR SOLVING THE PROBLEMS

The damping material according to one aspect of the present invention basically comprises a thermally conductive filler, a graphite, and a tuckifier resin.

The damping material according to another aspect of the present invention comprises a thermally conductive filler, a graphite having an average particle size exceeding 100 µm, and a tuckifier resin.

The damping material according to still another aspect of the present invention comprises 40 to 70 vol.% of the thermally conductive filler, 10 to 50 vol.% of the graphite, and 10 to 30 vol.% of the tuckifier resin.

The damping material according to a further aspect of the present invention comprises a thermally conductive filler for damping applied vibrations by mutual friction, a graphite for damping the applied vibrations by friction at least with the thermally conductive filler, and a tuckifier resin, and, in such a damping material, adhesiveness is imparted by the tuckifier resin.

In the damping material in accordance with the present invention, as the graphite, it is possible to cite as examples an artificial graphite and a natural graphite such as a scaly graphite; however, the graphite is a scaly graphite in a preferred example.

The damping material in accordance with the present invention may further comprise at least one of a vulcanized rubber powder and a crystalline polyester resin as other components. The compounding ratio of the vulcanized rubber powder is preferably not more than 40 vol.%, more preferably 7 to 30 vol.% with respect to the aforementioned damping material, and the compounding ratio of the crystalline polyester resin is preferably more than 0 vol.% and not more than 20 vol.%, more preferably more than 0 vol.% and not more than 15 vol.%, with respect to the damping material.

In a preferred example of the present invention, the thermally conductive filler includes one kind or two or more kinds of particles of a metal oxide, a metal nitride, a metal carbide, and a metal hydroxide, and the tuckifier resin (adhesiveness imparting resin) includes at least one kind selected from among natural resins including a rosin, a rosin-based resin such as a rosin derivative, and a terpene-based resin such as a terpene resin, and synthetic resins including a petroleum resin, a phenolic resin, a coal-based resin, a terpene-based resin and the like.

A vibration damping member having a columnar shape such as a plug in accordance with the present invention is formed of the above-described damping material, and is defined by one end face, another end face opposing the one end face, and a side surface bridging the one end face and the other end face, and is adapted to allow relative flexural deformation of the other end face with respect to the one end face in a horizontal direction which is a parallel direction to the one end face, to thereby attenuate the energy of the relative flexural deformation. Such a vibration damping member has performance such as sufficient damping performance and displacement follow-up capability, and after the occurrence of deformation due to an external force such as vibration and impact, the vibration damping member is adapted to be adhered again and restored to a state persisting prior the deformation.

A seismic isolation apparatus in accordance with the present invention comprises: a laminated elastic body in which rigid material layers having rigidity and elastic material layers having elasticity are alternately laminated, a cylindrical hollow portion defined at least by an inner peripheral surface of the laminated elastic body, and a cylindrical plug press-fitted in the cylindrical hollow portion, wherein the cylindrical plug is formed of the above-described damping material. Such a cylindrical plug in a preferred example is adapted to support a load in a laminated direction together with the laminated elastic body.

### ADVANTAGES OF THE INVENTION

According to the present invention, it is possible to provide a damping material suitable for use in a vibration damping member, a vibration damping member such as a plug having displacement follow-up performance and the like, and a seismic isolation apparatus exhibiting excellent damping performance and having the characteristics of stable strain dependence, temperature dependence, and bearing pressure dependence.

### BRIEF DESCRIPTION OF THE DRAWINGS

Fig. 1 is an explanatory vertical cross-sectional view of a preferred embodiment of a seismic isolation apparatus in accordance with the present invention;
Fig. 2 is an explanatory diagram illustrating the relationship between horizontal displacement and horizontal load in the embodiment shown in Fig. 1;
Fig. 3 is an explanatory diagram illustrating test results on the relationship between horizontal displacement and horizontal load in the embodiment shown in Fig. 1 at a vertical bearing pressure of 5 MPa;
Fig. 4 is an explanatory diagram illustrating test results on the relationship between horizontal displacement and horizontal load in the embodiment shown in Fig. 1 at a vertical bearing pressure of 10 MPa;
Fig. 5 is an explanatory diagram illustrating test results on the relationship between horizontal displacement and horizontal load in the embodiment shown in Fig. 1 at a vertical bearing pressure of 15 MPa;
Fig. 6 is an explanatory diagram illustrating test results on the relationship between horizontal displacement and horizontal load in the embodiment of a seismic isolation apparatus in accordance with the present invention shown in Fig. 1 at a vertical bearing pressure of 20 MPa;
Fig. 7 is an explanatory diagram illustrating test results on the relationship between horizontal displacement and horizontal load in the embodiment shown in Fig. 1 at 0°C;
Fig. 8 is an explanatory diagram illustrating test results on the relationship between horizontal displacement and horizontal load in the embodiment shown in Fig. 1 at 20°C; and
Fig. 9 is an explanatory diagram illustrating test results on the relationship between horizontal displacement and horizontal load in the embodiment shown in Fig. 1 at 40°C.

### MODE FOR CARRYING OUT THE INVENTION

The damping material in accordance with the present invention basically contains a thermally conductive filler, graphite, and a tackifier resin which mainly functions as an adhesiveness imparting agent. Hereafter, a more detailed description will be given of these components by citing specific examples. It should be noted that the invention is not limited to these examples.

The thermally conductive filler exhibits a damping effect for damping vibrations and the like through mutual friction occurring in the damping material or friction occurring with the graphite, particularly the scaly graphite, a shape retaining effect for retaining the shape of the graphite, particularly the scaly graphite, and a heat dissipating effect for dissipating frictional heat occurring in the damping material.

As the thermally conductive fillers, it is possible to cite as examples particles of metal oxides such as aluminum oxide (Al₂O₃), calcium oxide (CaO₂), magnesium oxide (MgO), zinc oxide (ZnO), titanium oxide (TiO₂), silicon oxide (SiO₂), iron oxide (Fe₂O₃), nickel oxide (NiO), and copper oxide (CuO), metal nitrides such as boron nitride (BN), aluminum nitride (AlN), and silicon nitride (Si₃N₄), metal carbides such as boron carbide (B₄C), aluminum carbide (Al₄C₃), silicon carbide (SiC), and titanium carbide (TiC), and metal hydroxides such as aluminum hydroxide [Al(OH)₃], magnesium hydroxide [Mg(OH)₂], sodium hydroxide (NaOH), calcium hydroxide [Ca(OH)₂], and zinc hydroxide [Zn(OH)₂]. One kind or two or more kinds are selected from among particles of the metal oxide, metal nitride, metal carbide, and metal hydroxide, and are used as the thermally conductive filler. Among others, particles of magnesium oxide, aluminum oxide, silicon oxide, aluminum nitride, silicon nitride, boron nitride, silicon carbide, and the like are preferable as thermally conductive fillers since they are high in thermal conductivity and in the light of diffusibility.

The particle size of these thermally conductive fillers plays an important part in the quality of diffusibility of heat generated in the damping material, and a thermally conductive filler having an average particle size of from 10 µm to 50 µm is preferable. In particular, by compounding particles having different granularities, for example, particles of a metal oxide having fine granularity with an average particle size of 10 µm or thereabouts and particles of a metal oxide having coarse granularity with the average particle size of 50 µm or thereabouts at a ratio of 50 : 50 or 40 : 60, the particles of the metal oxide having fine granularity with an average particle size of 10 µm or thereabouts fill gaps among the dispersed particles of the metal oxide having coarse granularity with the average particle size of 50 µm or thereabouts, thereby making it possible to obtain continuity of the particles of the metal oxides and, hence, making it possible to enhance heat dissipation. Furthermore, by compounding particles of different metal oxides, for example, particles of aluminum oxide and particles of magnesium oxide at a ratio of 50 : 50, it is possible to enhance heat dissipation. The "average particle size" herein means a particle size at an integrated value of 50% in the particle size distribution obtained by the laser diffraction/scattering method.

As the compounding ratio of the thermally conductive filler selected from among the particles of the metal oxide, metal nitride, metal carbide, metal hydroxide, and metal carbide, 40 to 70 vol.% is appropriate. If the compounding ratio is less than 40 vol.%, instability is entailed in the damping property evaluated by the area of a region surrounded by a hysteresis (history) curve, whereas if the compounding ratio exceeds 70 vol.%, the moldability of the damping material is deteriorated, making it difficult to fabricate, for example, the cylindrical plug of a desired form.

As the graphite, it is possible to cite as examples an artificial graphite and a natural graphite such as a scaly graphite. The scaly graphite as a preferable example of the graphite has a flaky shape, and a surface area thereof is large in comparison with a granular graphite, so that when the vibration damping member is subjected to an external force such as vibration and impact, the scaly graphite effectively exhibits the action of attenuating the external force such as vibration and impact by virtue of interlayer sliding friction and friction with the thermally conductive filler and the like which occur at that time. As the graphite, one whose average particle size exceeds 100 µm is preferably used, whereas, as the scaly graphite, one is used which has an average particle size of preferably 100 µm to 1000 µm, more preferably 500 µm to 700 µm, and has a particle size with a large contact area.

As the compounding ratio of the graphite, particularly the scaly graphite, 10 to 50 vol.% is appropriate. If the compounding ratio is less than 10 vol.%, sufficient frictional damping is not exhibited, whereas if the compounding ratio exceeds 50 vol.%, there is a possibility of deteriorating the moldability of the damping material. Even if the damping material can be molded, the strength of the obtained molded product, i.e., the vibration damping member, is caused to decline, and fragility is manifested.

The tuckifier resin imparts adhesiveness to the damping material and enables compression molding of the damping material. For example, in the vibration damping member such as the cylindrical plug formed by the compression molding of the damping material containing the tuckifier resin, the tuckifier resin exhibits the effect of reducing a porosity thereof. In addition, after deformation is caused in the vibration damping member due to an external force such as vibration and impact, the tuckifier resin is adhered again to restore the vibration damping member to the one persisting prior to the deformation, so that the vibration damping member can be made excellent in durability. As the compounding ratio of the tuckifier resin, 10 to 30 vol.% is appropriate. If the compounding ratio is less than 10 vol.%, it is difficult to impart sufficient adhesiveness to the damping material, whereas if the compounding ratio exceeds 30 vol.%, there is a possibility of deteriorating the kneading processability and moldability of the damping material.

The tuckifier resin is a thermoplastic resin which generally has a molecular weight of several hundreds to several thousands, and various natural resins and synthetic resins can be used. As the tuckifier resins, it is possible to cite as specific examples natural resins including rosins, rosin-based resins such as rosin derivatives, and terpene-based resins such as terpene resins, and synthetic resins including petroleum resins, phenolic resins, coal-based resins, and terpene-based resins, and at least one kind thereof is selected for use. As the tuckifier resin used in the present invention, one having a ring and ball method softening point (JIS K 5601-2-2) or a ring and ball method softening point (JIS K 2207) of 150°C or less, preferably 80 to 120°C, is preferred in the light of kneading processability and moldability. If the melting point is less than 80°C, adhesiveness is becomes intense, so that there is a possibility of deteriorating processability during kneading, whereas if the melting point exceeds 150°C, viscosity becomes high and softening becomes difficult during processing, so that there is a possibility of deteriorating workability.

As the rosins, it is possible to cite natural rosins including gum rosin, wood rosin, and tall rosin, stabilized rosins and polymerized rosins subjected to disproportionation or hydrogenation using a natural rosin, and unsaturated acid modified rosins obtained by modifying a natural rosin by an unsaturated acid such as maleic acid, fumaric acid, (meth)acrylic acid, or the like. As for these rosins, one kind may be used singly, or two or more kinds may be used in combination.

As the rosin derivatives, various kinds derived from the aforementioned rosins can be used, and it is possible to cite as examples esterified products of the aforementioned rosins, phenolic modified products, and esterified products thereof. The esterified product of the resin refers to one obtained by subjecting the aforementioned rosin and a polyhydric alcohol to esterification reaction. As the polyhydric alcohol, it is possible to cite as examples dihydric alcohols including ethylene glycol, diethylene glycol, propylene glycol, and neopentylglycol, trihydric alcohols including glycerin, trimethylolethane, and trimethylol propane, tetrahydric alcohols including pentaerythritol and diglycerine, and hexahydric alcohols including di-pentaerythritol. As for these rosin derivatives, one kind may be used singly, or two or more kinds may be used in combination.

As rosin esters which can be used as specific commercially available products, it is possible to cite the following.

### (Rosin Esters)

"PENSEL A: softening point 100°C or higher," "PENSEL AZ: softening point 95 to 105°C," "ESTER GUM AA-G: softening point 82°C or higher," and "ESTER GUM 105: softening point 100 to 110°C," which are manufactured by ARAKAWA CHEMICAL INDUSTRIES, LTD.; and "NEOTALL G2: softening point 97 to 104°C," "NEOTALL 101N: softening point 93 to 103°C," "NEOTALL 125HK: softening point 120 to 130°C," "HARITACK PH: softening point 93 to 103°C," "HARITACK F105: softening point 97 to 107°C," "HARITACK FK100: softening point 96 to 102°C," and "HARITACK FK125: softening point 122 to 128°C," which are manufactured by Harima Chemicals, Inc. (the listed names are trade names, and the softening point is based on the ring and ball method).

### (Polymerized Rosin Esters)

"PENSEL D-125: softening point 120 to 130°C" and "PENSEL D-135: softening point 130 to 140°C," which are manufactured by ARAKAWA CHEMICAL INDUSTRIES, LTD. (the listed names are trade names, and the softening point is based on the ring and ball method).

### (Disproportionated Rosin Esters)

"SUPER ESTER A-75: softening point 70 to 80°C," "SUPER ESTER A-100: softening point 95 to 105°C," "SUPER ESTER A-115: softening point 108 to 120°C," and "SUPER ESTER A-125: softening point 120 to 130°C," which are manufactured by ARAKAWA CHEMICAL INDUSTRIES, LTD. (the listed names are trade names, and the softening point is based on the ring and ball method).

### (Rosin Modified Maleic Acid Resins)

"HARIMACK T-80: softening point 80 to 90°C," "HARIMACK R-100: softening point 100 to 110°C," "HARIMACK M-453: softening point 100 to 110°C," "HARITACK 4851: softening point 95 to 105°C," "HARITACK 4821: softening point 100 to 115°C," "HARITACK 4740: softening point 115 to 125°C," and "HARITACK 28JA: softening point 130 to 140°C," which are manufactured by Harima Chemicals, Inc. (the listed names are trade names, and the softening point is based on the ring and ball method).

### (Hydrogenated Rosin Ester)

"ESTER GUM (trade name): softening point 80°C or higher" manufactured by Harima Chemicals, Inc. (the listed name is a trade name, and the softening point is based on the ring and ball method).

Petroleum resins are obtained by polymerizing fractions containing unsaturated hydrocarbon monomers which are by-produced by thermal cracking of petroleum naphtha or the like, and are specifically classified into aliphatic petroleum resins, aromatic petroleum resins, aliphatic/aromatic petroleum resins, and alicyclic petroleum resins (hydrogenated petroleum resins).

As the aliphatic petroleum resins, it is possible to cite, for example, a polymer using only one kind or two or more kinds of olefins and dienes having a carbon number of 4 to 5 [olefins such as butene-1, isobutylene, and pentene-1; and dienes such as butadiene, piperylene (1,3-pentadiene), and isoprene]. In particular, aliphatic petroleum resins (so-called "C4 petroleum resins," "C5 petroleum resins," and the like) obtained from fractions (so-called "C4 petroleum fractions" and "C5 petroleum fractions") of such as butadiene, piperylene, isoprene, and the like can be cited as preferred examples, and it is possible to cite, among others, "QUINTONE A100: softening point 100°C," "QUINTONE G100B: softening point 100°C," and "QUINTONE G115: softening point 115°C," which are manufactured by ZEON CORPORATION; and "Escorez 1100: softening point 95 to 105°C" and "Escorez 1200: softening point 95 to 105°C," which are manufactured by Exxon Mobil Corporation (the listed names are trade names, and the softening point is based on the ring and ball method).

As the aromatic petroleum resins, it is possible to cite, among others, polymers using one kind or two or more kinds of vinyl group-containing aromatic hydrocarbons having a carbon number of 8 to 10 (such as styrene, o-vinyltoluene, m-vinyltoluene, p-vinyltoluene, α-methylstyrene, β-methylstyrene, indene, and methyl indene). Among others, aromatic petroleum resins (so-called "C9 petroleum resins") obtained from fractions (so-called "C9 petroleum fractions" of such as vinyltoluene and indene can be cited as preferable. As specific examples of the aromatic petroleum resin, it is possible to cite, among others, "Nisseki Neopolymer S, Nisseki Neopolymer L-90: softening point 100°C," "Nisseki Neopolymer 100: softening point 100°C," "Nisseki Neopolymer 120: softening point 120°C," "Nisseki Neopolymer 130: softening point 130°C," "Nisseki Neopolymer 140: softening point 140°C," "Nisseki Neopolymer E-100: softening point 90°C," "Nisseki Neopolymer E-130: softening point 125°C," and "Nisseki Neopolymer E-130S: softening point 128°C," which are manufactured by JX Nippon Oil & Energy Corporation (the listed names are trade name, and the softening point is measured by the ring and ball method); as well as "Petcoal LX: softening point 98°C," "Petcoal 100T: softening point 95°C," "Petcoal 120: softening point 120°C," "Petcoal 130: softening point 125°C," and "Petcoal 140: softening point 135°C," and "Petcoal 150: softening point 140°C," which are manufactured by Tosoh Corporation [the listed names are trade name, and the softening point is based on JIS K 2207 (the ring and ball method)].

As the aliphatic/aromatic petroleum resins, it is possible to cite, among others, copolymer-based petroleum resins (so-called "C5/C9 copolymer resins") obtained by copolymerizing the aforementioned C5 petroleum fraction and C9 petroleum fraction. As specific examples, it is possible to cite, among others, "Petrotack 90: softening point 95°C," "Petrotack 90HM: softening point 90°C," and "Petrotack 130: softening point 130°C," which are manufactured by Tosoh Corporation (the listed names are trade name, and the softening point is measured by JIS K 2207); "QUINTONE G100B: softening point 100°C" and "QUINTONE G115: softening point 115°C," which are manufactured by ZEON CORPORATION (the listed names are trade name, and the softening point is measured by JIS K 2207); and "Escorez ECR 213: softening point 99 to 109°C" manufactured by Exxon Mobil Corporation (the listed name is a trade name, and the softening point is based on TSTM 4027).

Alicyclic petroleum resins include hydrogenated petroleum resins obtained by hydrogenating the above-described aromatic petroleum resin or aliphatic/aromatic petroleum resin and synthetic resins obtained by synthesizing as a principal material dicyclopentadiene extracted from a C5 fraction. Among others, hydrogenated petroleum resins obtained by hydrogenating the aforementioned aromatic petroleum resin or the aliphatic/aromatic petroleum resin are representative. As specific examples of the alicyclic petroleum resin, it is possible to cite, among others, "ARKON P-90: softening point 90 ± 5°C," "ARKON P-100: softening point 100 ± 5°C," "ARKON P-115: softening point 115 ± 5°C," "ARKON P-125: softening point 125 ± 5°C," and "ARKON P-140: softening point 140 ± 5°C," which are manufactured by ARAKAWA CHEMICAL INDUSTRIES, LTD. (the listed names are trade names, and the softening point is measured by the ring and ball method); and "Escorez 5300: softening point 100 to 110°C" and "Escorez 5320: softening point 120 to 130°C," which are manufactured by Exxon Mobil Corporation (the listed name is a trade name, and the softening point is based on TSTM 4027).

As the phenolic resins, it is possible to cite, among others, resol type phenolic resins obtained by reacting a phenol of various types with formaldehyde in the presence of an alkali catalyst and novolac type phenolic resins obtained by reacting them in the presence of an acid catalyst, as well as rosin modified phenolic resins obtained by reacting the resol type phenolic resin or the novolac type phenolic resin with the aforementioned natural rosin. In addition, as the phenols, it is possible cite, among others, phenol, m-cresol, 3,5-xylenol, p-alkylphenol, resorcin and the like. As specific examples, it is possible to cite, among others, "TAMANOL 100S (novolac): softening point 110 to 130°C" and "TAMANOL 100S (resole): softening point 100 to 115°C," which are manufactured by ARAKAWA CHEMICAL INDUSTRIES, LTD.; "RESITOP (alkylphenol resin having an alkyl group with a carbon number of 8): softening point 78 to 105°C" manufactured by Gun Ei Chemical Industry Co., Ltd.; and "TACKIROL (alkylphenol resin having an alkyl group with a carbon number of 8): softening point 78 to 105°C" manufactured by TAOKA CHEMICAL COMPANY, LIMITED (the listed names are trade names, and the softening point is based on the ring and ball method).

As the coal-based resins, it is possible to cite those obtained by polymerizing a mixture of coumarone and indene in coal tar, styrene and the like. As specific examples of the coal-based resin, it is possible to cite coumarone resins such as "Coumarone Resin 95°C" and "Coumarone Resin 120°C" manufactured by KOBE OIL CHEMICAL INDUSTRIAL Co., Ltd., and "Coumarone Resin NG4: softening point 95 to 100°C" manufactured by Nippon Steel Chemical Co. Ltd., as well as coumarone-indene copolymer resins such as "Nitto Resin Coumarone G90: softening point 90°C," "Nitto Resin Coumarone G-100N: softening point 100°C," and "Nitto Resin Coumarone V-120: softening point 120°C," which are manufactured by NITTO CHEMICAL CO., LTD. (the listed names are trade names, and the softening point is based on the ring and ball method).

The terpene-based resin is normally obtained from a terpene monomer alone, or by copolymerizing a terpene monomer and an aromatic monomer or a terpene monomer and a phenol, in an organic solvent in the presence of a Friedel-Crafts type catalyst, or may be a hydrogenated terpene-based resin obtained by hydrogenating the obtained terpene-based resin. As the terpene-based resins, it is possible to cite, for example, terpene resins including α-pinene resins, β-pinene resins, aromatic modified terpene resins, terpene phenolic resins, and hydrogenated terpene resins.

As the terpene monomers, it is possible to cite, among others, hemiterpenes having a carbon number of 5, such as isoprene; monoterpenes having a carbon number of 10, such as α-pinene, β-pinene, dipentene, d-limonene, myrcene, alloocimene, ocimene, α-phellandrene, α-terpinene, γ-terpinene, terpinolene, 1,8-cineole, 1,4-cineole, α-terpineol, β-terpineol, γ-terpineol, sabinene, para mentha dienes, and careens; sesquiterpenes having a carbon number of 15, such as caryophyllene and longifolene; and such as diterpenes having a carbon number of 20. As the aromatic monomers, it is possible to cite, among others, styrene, α-methylstyrene, vinyltoluene, isopropenyl toluene and the like. As the phenols, it is possible to cite, among others, phenol, cresol, xylenol, bisphenol A and the like.

As specific examples of the terpene resin, it is possible to cite, among others, "YS Resin PX1000: softening point 100 ± 5°C," "YS Resin PX1150: softening point 115 ± 5°C," and "YS Resin PX1250: softening point 125 ± 5°C," which are manufactured by YASUHARA CHEMICAL CO., LTD. (the listed names are trade names, and the softening point is based on the ring and ball method). As specific examples of the hydrogenated terpene resin, it is possible to cite, among others, "Clearon P105: softening point 105 ± 5°C," "Clearon P115: softening point 105 ± 5°C," "Clearon P125: softening point 125 ± 5°C," and "Clearon P135: softening point 135 ± 5°C," which are manufactured by YASUHARA CHEMICAL CO., LTD. (the listed names are trade names, and the softening point is based on the ring and ball method). In addition, as specific examples of the aromatic modified terpene resin, it is possible to cite, among others, "YS Resin TO105: softening point 105 ± 5°C," "YS Resin TO115: softening point 115 ± 5°C," and "YS Resin TO125: softening point 125 ± 5°C," which are manufactured by YASUHARA CHEMICAL CO., LTD. (the listed names are trade names, and the softening point is based on the ring and ball method). As specific examples of the terpene phenolic resin, it is possible to cite, among others, "TAMANOL 901: softening point 120 ∼ 135°C" manufactured by ARAKAWA CHEMICAL INDUSTRIES, LTD., and "YS Polyster U115: softening point 115 ± 5°C," "YS Polyster U130: softening point 130 ± 5°C," "YS Polyster T100: softening point 100 ± 5°C," "YS Polyster T115: softening point 115 ± 5°C," "YS Polyster T130: softening point 130 ± 5°C," and "YS Polyster T145: softening point 145 ± 5°C," which are manufactured by YASUHARA CHEMICAL CO., LTD. (the listed names are trade names, and the softening point is based on the ring and ball method).

At least one of a vulcanized rubber powder and a crystalline polyester resin can be compounded with the damping material constituted of the above-described thermally conductive filler, graphite, and the tuckifier resin.

The vulcanized rubber powder plays a role in promoting the movability of the vibration damping member by imparting flexibility to such as a cylindrical plug obtained by molding the damping material and in increasing the amount of energy absorbed. As the vulcanized rubber powder, a pulverized powder is used which has an average particle size of 90 µm and is formed by pulverizing a vulcanized rubber, such as natural rubber (NR), polyisoprene rubber (IR), polybutadiene rubber (BR), a styrene-butadiene rubber (SBR), chloroprene rubber (CR), ethylene-propylene rubber (EPM, EPDM), nitrile rubber (NBR), butyl rubber (IIR), halogenated butyl rubber, acrylic rubber (ACM), ethylene vinyl acetate rubber, ethylene-methyl acrylate copolymer, or the like. One kind or two or more kinds of these vulcanized rubber powders are selected for use. The compounding ratio of the vulcanized rubber powder is preferably not more than 40 vol.%, more preferably 7 to 30 vol.%, with respect to the damping material consisting of a thermally conductive filler, a graphite or particularly a scaly graphite, and a tuckifier resin, or the damping material constituted of a thermally conductive filler, a graphite or particularly a scaly graphite, a tuckifier resin, and a crystalline polyester resin.

The crystalline polyester resin has an effect of rendering into a bilinear type the hysteresis (history) shape in the seismic isolation apparatus incorporating the vibration damping member such as the cylindrical plug obtained by molding the damping material. The compounding ratio of the crystalline polyester resin is preferably not more than 20 vol.%, more preferably 0 to 15 vol.%, with respect to the damping material constituted of a thermally conductive filler, a graphite or particularly scaly graphite, and a tuckifier resin, or the damping material constituted of a thermally conductive filler, a graphite or particularly a scaly graphite, a tuckifier resin, and a vulcanized rubber powder.

As the crystalline polyester resins, it is possible to cite, for example, aliphatic polyesters including polyglycolic acid, polylactic acid, polycaprolactone, and polyethylene succinate, semiaromatic polyesters such as polyethylene terephthalate, polytrimethylene terephthalate, polybutylene terephthalate, polyethylene naphthalate, polybutylene naphthalate, and polycyclohexane dimethylene terephthalate, and an ester-based elastomer. As specific examples of the crystalline polyester resin, it is possible to cite, among others, "Byron GM900," "Byron GM920," and "Byron GM990" manufactured by Toyobo Co., Ltd. (the listed names are trade names). The molecular weight of the crystalline polyester resin is preferably 10000 to 35000, more preferably 15000 to 30000.

The damping material and the vibration damping member constituted of the damping material in accordance with the present invention are manufactured as follows.

In a first step, respective components of the thermally conductive filler, the scaly graphite as graphite, and the tuckifier resin powder, or respective components in which at least one of the vulcanized rubber powder and the crystalline polyester resin is added to these components are weighed to a predetermined ratio of amounts, and they are charged into an agitating mixer such as a Banbury mixer and are mixed uniformly to prepare a mixture. In a second step, the mixture is charged into a kneader, and is heated and kneaded to fabricate a damping material.

The damping material fabricated in the above-described method is filled into, for instance, a cylindrical hollow portion of a mold heated to a temperature of from 80 to 120°C, and is subjected to compression molding under a molding pressure of 0.1 to 1.0 tons/cm². After the compression molding, the damping material is gradually cooled while maintaining the compressed state in the cylindrical hollow portion of the mold, is then removed from the cylindrical hollow portion of the mold, thereby fabricating a vibration damping member such as a cylindrical plug. The vibration damping member thus fabricated can be used as a cylindrical plug for a seismic isolation apparatus.

The seismic isolation apparatus of the present invention, which is comprised of a laminated elastic body in which rigid material layers having rigidity and elastic material layers having elasticity are alternately laminated, a cylindrical hollow portion defined at least by an inner peripheral surface of this laminated elastic body, and a cylindrical plug press-fitted in this cylindrical hollow portion, and in which the cylindrical plug is formed of the aforementioned vibration damping material, has the characteristics of high damping performance and bearing pressure dependence. Referring to the drawings, a detailed description will be given hereafter of a preferred embodiment of such a seismic isolation apparatus.

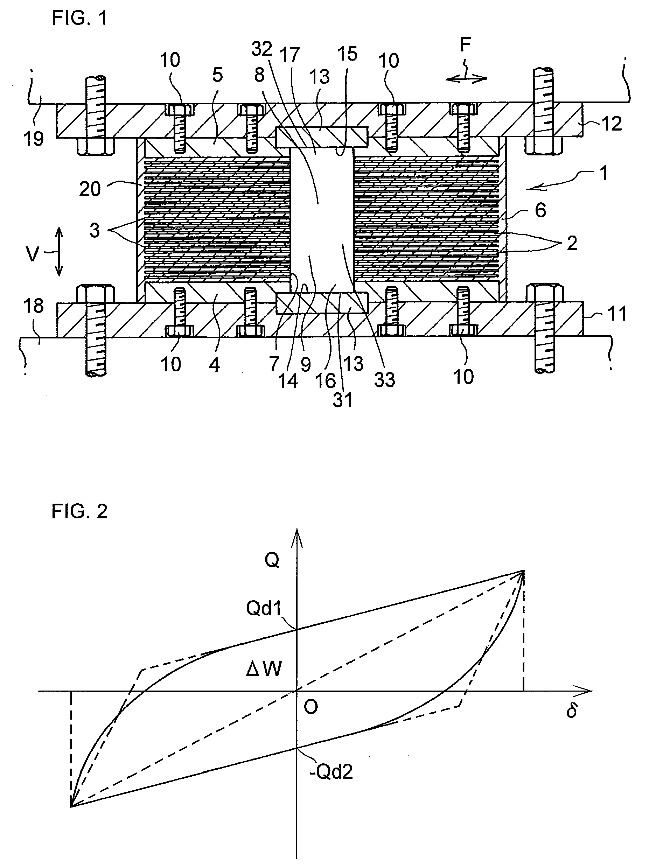

As shown in Fig. 1, the seismic isolation apparatus 1 of this embodiment includes: an annular laminated elastic body 6 in which elastic material layers formed of elastic plates 2 made of annular rubber or the like and rigid material layers formed of a plurality of annular thin-walled rigid steel plates 3 and a pair of annular thick-walled rigid steel plates 4 and 5 are alternately laminated; a cylindrical plug 9 formed of the vibration damping material and disposed densely in a cylindrical hollow portion 8 defined by at least an inner peripheral surface 7 of the laminated elastic body 6; upper and lower flange plates 12 and 11 respectively connected to the thick-walled rigid steel plates 4 and 5 by bolts 10; and a pair of annular shear keys 13 for each fixing each of the upper and lower flange plates 12 and 11 and a corresponding one of the thick-walled rigid steel plates 4 and 5 to each other at each of a lower surface and an upper surface of the cylindrical plug 9 in a shearing direction (horizontal direction) F. The cylindrical hollow portion 8 with the cylindrical plug 9 disposed densely therein is defined by, in addition to the inner peripheral surface 7, an upper surface 14 of the lower shear key 13 and a lower surface 15 of the upper shear key 13. In the seismic isolation apparatus 1, the thick-walled rigid steel plates 4 and 5 are disposed by being respectively embedded in elastic material layers on upper and lower end face sides of the laminated elastic body 6, and a lower end portion 16 of the cylindrical plug 9 is disposed densely in a lower end portion of the cylindrical hollow portion 8 defined by the inner peripheral surface of the thick-walled rigid steel plate 5, while an upper end portion 17 of the cylindrical plug 9 is disposed densely in an upper end portion of the cylindrical hollow portion 8 defined by the inner peripheral surface of the thick-walled rigid steel plate 4. This seismic isolation apparatus 1 is used such that the lower flange plate 11 side is connected to a foundation 18 and the upper flange plate 12 side is connected to a structure 19, so as to support the load of the structure 19 in a laminated direction (vertical direction) V by the laminated elastic body 6 and the cylindrical plug 9.

Such a cylindrical plug 9 serving as a columnar vibration damping member constituted of the vibration damping material is defined by one circular end face 31, another circular end face 32 opposing the one end face 31, and a cylindrical side surface 33 bridging the one end face 31 and the other end face 32, and is adapted to allow relative flexural deformation of the other end face 32 with respect to the one end face 31 in a horizontal direction F which is a parallel direction to the one end face 31, to thereby attenuate the energy of that relative flexural deformation.

In the case of manufacturing this seismic isolation apparatus 1, the elastic plates 2 formed of annular rubber plates or the like and the thin-walled rigid steel plates 3 formed of annular rigid metal plates or the like are alternately laminated, the thick-walled rigid steel plates 4 and 5 formed of annular rigid metal plates or the like are disposed on the lower surface and the upper surface of the laminated assembly, and these are fixed to each other by vulcanization bonding or the like under pressure in a mold, to thereby prepare the annular laminated elastic body 6. Subsequently, the cylindrical plug 9 is press-fitted in the cylindrical hollow portion 8 so as to form the cylindrical plug 9 in the cylindrical hollow portion 8. The press-fitting of the cylindrical plug 9 is effected by pressing the cylindrical plug 9 into the cylindrical hollow portion 8 by a hydraulic ram or the like such that a gap is not produced for the cylindrical plug 9 with respect to the inner peripheral surface 7 of the laminated elastic body 6. After the press-fitting of the cylindrical plug 9, the shear keys 13 are respectively disposed at the lower end portion and the upper end portion of the cylindrical hollow portion 8 such that the upper surface 14 thereof and the lower surface 15 thereof are respectively brought into contact with the one end face 31 of the cylindrical plug 9 and the other end face 32 of the cylindrical plug 9 without a gap, and the upper and lower flange plates 12 and 11 are respectively mounted on the thick-walled rigid steel plates 4 and 5 by means of the bolts 10. It should be noted that, in the formation of the laminated elastic body 6 by vulcanization bonding under pressure in the mold, a cylindrical cladding layer 20 formed of rubber or the like may be integrally formed on the elastic material layers formed of the elastic plates 2 in such a manner as to cover the outer peripheral surfaces of the thin-walled rigid steel plates 3 and the thick-walled rigid steel plates 4 and 5.

With this seismic isolation apparatus 1, the cylindrical plug 9 is press-fitted in the cylindrical hollow portion 8, and when the structure 19 is moved in the horizontal direction F with respect to the foundation 18 owing to vibration, impact, or the like and is subjected to a shearing force in the horizontal direction (shearing direction) F, the cylindrical plug 9 undergoes shear deformation in the horizontal direction F together with the laminated elastic body 6 and absorbs the vibrational energy in the horizontal direction F, thereby making it possible to speedily attenuate the external force such as vibration and impact. The seismic isolation apparatus 1, in which the cylindrical plug 9 serving as the vibration damping member manufactured from the damping material constituted of the thermally conductive filler, the scaly graphite as graphite, and the thermally conductive filler resin, or from the damping material in which at least one of the vulcanized rubber powder and the crystalline polyester resin is added thereto is press-fitted in the cylindrical hollow portion 8, exhibits excellent damping performance and has the characteristics of bearing pressure dependence. In such a seismic isolation apparatus 1, after the occurrence of deformation and fracture due to an external force such as vibration and impact, the cylindrical plug 9 is adapted to be adhered again and restored substantially with the characteristics persisting prior the deformation.

### [Examples]

Hereafter, a more detailed description will be given of the present invention with reference to examples, but the present invention is not limited to these examples.

### Example 1 to Example 15

Respective components of the thermally conductive filler, the scaly graphite as graphite, and the thermally conductive filler powder, or respective components in which at least one of the vulcanized rubber powder and the crystalline polyester resin was added to these components were weighed to a compounding ratio (vol.%) shown in Tables 1 and 2, and they were charged into a Banbury mixer and were agitated and mixed uniformly, thereby preparing mixtures consisting of respective component compositions. The mixture was charged into a kneader heated to a temperature of 120°C and was kneaded while being heated, thereby fabricating the damping material. The damping material was filled into the cylindrical hollow portion of a mold heated to a temperature of 120°C, and was subjected to compression molding under a molding pressure of 0.6 ton/cm². After molding, the damping material was gradually cooled in the cylindrical hollow portion of the mold while maintaining the pressurized state, and after it was cooled down to room temperature, the cylindrical plug constituted of the vibration damping material having a diameter ϕ of 50mm was taken out from the cylindrical hollow portion of the mold.

**[Table 1]**

| | | | Examples | | | | | | | |
|---|---|---|---|---|---|---|---|---|---|---|
| | | | 1 | 2 | 3 | 4 | 5 | 6 | 7 | 8 |
| <thermally conductive filler> | <av. particle dia.> | | | | | | | | | |
| MgO | 10 µm | | 0 | 22.4 | 22.4 | 0 | 22.4 | 15.9 | 22.4 | 11.2 |
| | 50 µm | | 0 | 33.7 | 0 | 0 | 33.7 | 23.8 | 33.7 | 16.8 |
| Al₂O₃ | 10 µm | | 22.4 | 0 | 0 | 0 | 0 | 0 | 0 | 11.2 |
| | 50 µm | | 33.7 | 0 | 33.7 | 0 | 0 | 0 | 0 | 16.8 |
| Si₃N₄ | 10 µm | | 0 | 0 | 0 | 22.4 | 0 | 0 | 0 | 0 |
| Mg(OH)₂ | 50 µm | | 0 | 0 | 0 | 33.7 | 0 | 0 | 0 | 0 |
| <Scaly graphite> | <av. particle dia.> 650 µm | | 14.6 | 16.5 | 16.5 | 11.0 | 16.5 | 16.5 | 14.6 | 14.6 |
| <Tuckifier resin> | | | | | | | | | | |
| Rosin ester | | | 0 | 22.0 | 0 | 0 | 0 | 0 | 0 | 0 |
| Aromatic petroleum resin | | | 0 | 0 | 22.0 | 0 | 0 | 0 | 0 | 0 |
| Coumarone resin | | | 0 | 0 | 0 | 22.0 | 0 | 0 | 0 | 0 |
| Coumarone-indene copolymer resin | | | 0 | 0 | 0 | 0 | 13.7 | 22.0 | 0 | 19.5 |
| Terpene resin | | | 0 | 0 | 0 | 0 | 0 | 0 | 19.5 | 0 |
| Terpene phenolic resin | | | 19.5 | 0 | 0 | 0 | 0 | 0 | 0 | 0 |
| <Vulcanized rubber powder> | | | 9.8 | 0 | 0 | 0 | 0 | 16.5 | 9.8 | 9.8 |
| <Crystalline polyester resin> | | | 0 | 5.5 | 5.5 | 11.0 | 13.7 | 5.5 | 0 | 0 |
| Damping property Qd (at the time of 200% strain) | | kN | 20.8 | 24.0 | 21.7 | 21.6 | 23.5 | 21.2 | 25.8 | 25.0 |
| Surface bearing dependence (ratio with 5 MPa) | Vertical load | | | | | | | | | |
| | 5 MPa, | | 1.00 | 1.00 | 1.00 | 1.00 | 1.00 | 1.00 | 1.00 | 1.00 |
| | 10 MPa | | 1.29 | 1.28 | 1.24 | 1.31 | 1.42 | 1.36 | 1.33 | 1.40 |
| | 15 MPa | | 1.59 | 1.52 | 1.41 | 1.56 | 1.84 | 1.73 | 1.60 | 1.80 |
| | 20 MPa | | 1.90 | 1.76 | 1.58 | 1.81 | 2.26 | 2.01 | 1.87 | 2.21 |

**[Table 2]**

| | | | | Examples | | | | | | |
|---|---|---|---|---|---|---|---|---|---|---|
| | | | | 9 | 10 | 11 | 12 | 13 | 14 | 15 |
| <thermally conductive filler> | | <av. particle dia.> | | | | | | | | |
| MgO | | 10 µm | | 22.4 | 15.9 | 27.2 | 22.4 | 22.4 | 22.4 | 22.4 |
| | | 50 µm | | 33.7 | 23.8 | 40.8 | 33.7 | 33.7 | 33.7 | 33.7 |
| Al₂O₃ | | 10 µm | | 0 | 0 | 0 | 0 | 0 | 0 | 0 |
| | | 50 µm | | 0 | 0 | 0 | 0 | 0 | 0 | 0 |
| Si₃N₄ | | 10 µm | | 0 | 0 | 0 | 0 | 0 | 0 | 0 |
| Mg(OH)₂ | | 50 µm | | 0 | 0 | 0 | 0 | 0 | 0 | 0 |
| <Scaly graphite> | | <av. particle dia.> 650 µm | | 14.6 | 16.5 | 10.7 | 16.5 | 14.6 | 22.0 | 14.6 |
| <Tuckifier resin> | | | | | | | | | | |
| | Rosin ester | | | 0 | 0 | 0 | 0 | 0 | 0 | 0 |
| | Aromatic petroleum resin | | | 0 | 0 | 21.6 | 0 | 0 | 0 | 0 |
| | Coumarone resin | | | 19.5 | 0 | 0 | 0 | 0 | 0 | 0 |
| | Coumarone-indene copolymer resin | | | 0 | 11.0 | 14.2 | 22.0 | 19.5 | 22.0 | 15.6 |
| | Terpene resin | | | 0 | 0 | 0 | 0 | 0 | 0 | 0 |
| | Terpene phenolic resin | | | 0 | 0 | 0 | 0 | 0 | 0 | 0 |
| <Vulcanized rubber powder> | | | | 9.8 | 32.9 | 7.1 | 0 | 9.8 | 0 | 9.8 |
| <Crystalline polyester resin> | | | | 0 | 0 | 0 | 5.5 | 0 | 0 | 3.9 |
| Damping property Qd (at the time of 200% strain) | | | kN | 24.0 | 27.7 | 29.1 | 18.8 | 18.2 | 23.6 | 21.6 |
| Surface bearing dependence (ratio with 5 MPa) | | Vertical load | | | | | | | | |
| | | 5 MPa | | 1.00 | 1.00 | 1.00 | 1.00 | 1.00 | 1.00 | 1.00 |
| | | 10 MPa | | 1.37 | 1.35 | 1.36 | 1.22 | 1.38 | 1.25 | 1.27 |
| | | 15 MPa | | 1.71 | 1.65 | 1.70 | 1.41 | 1.75 | 1.51 | 1.56 |
| | | 20 MPa | | 2.05 | 1.96 | 2.03 | 1.58 | 2.11 | 1.77 | 1.84 |

In Tables 1 and 2, as the rosin ester of the tuckifier resin, "NEOTALL 125HK" manufactured by Harima Chemicals, Inc. was used; as the aromatic petroleum resin, "Nisseki Neopolymer 120" manufactured by JX Nippon Oil & Energy Corporation was used; as the coumarone resin, "Coumarone Resin 120°C" manufactured by KOBE OIL CHEMICAL INDUSTRIAL Co., Ltd. was used; as the coumarone-indene copolymer resin, "Nitto Resin Coumarone V-120" manufactured by NITTO CHEMICAL CO., LTD. was used; as the terpene resin, "YS Resin PX1250" manufactured by YASUHARA CHEMICAL CO., LTD. was used; and as the terpene phenolic resin, "YS Polyster U115" manufactured by YASUHARA CHEMICAL CO., LTD. was used.

Further, 23 thin-walled rigid steel plates having an outside diameter of 250 mm and a thickness of 1.4 mm and having rigidity and 24 elastic plates (vulcanized natural rubber: shear modulus of elasticity of rubber G = 0.4 N/mm²) having the same outside diameter of 250 mm and a thickness of 2.0 mm and having elasticity were alternately laminated. The pair of thick-walled rigid steel plates, which each had the same outside diameter of 250 mm and a thickness of 25 mm and each had in a central portion of the lower surface or the upper surface thereof a circular recess into which a disk-like shear key with a diameter of 70 mm could be fitted, were respectively disposed on the lower surface and the upper surface of the laminated assembly. Cylindrical plugs formed in Examples 1 to 11 and having a diameter φ of 50 mm were each press-fitted without a gap into the cylindrical hollow portion in the central portion of the laminated elastic body (height: 130.2 mm; outside diameter: 260 mm) which was obtained by fixing the aforementioned members to each other by vulcanization bonding and the like under pressure in the mold and had a cylindrical cladding layer with a height of 130.2 mm and a radial thickness of 5 mm, thereby fabricating the seismic isolation apparatus shown in Fig. 1.

With regard to the damping performance of the seismic isolation apparatus, an evaluation was made by the method described below.

### <Damping Performance>

In a state in which respective bearing pressure P of 5 MPa, 10 MPa, 15 MPa, and 20 MPa was being applied to the above-described seismic isolation apparatus in the vertical direction, the seismic isolation apparatus was vibrated at a vibration frequency of 0.33 Hz in the horizontal direction to cause a horizontal shear deformation (±48 mm = ± 100% shear strain) of a prescribed displacement. In Fig. 2 illustrating the relationship (horizontal restoring force characteristics diagram) between the horizontal displacement (abscissa axis δ) of the upper end of the laminated elastic body with respect to the lower end thereof and the horizontal load (horizontal load) (ordinate axis Q) of the seismic isolation apparatus, it is meant that the wider the area ΔW of the region surrounded by the hysteresis curve (solid line), the more the vibrational energy can be absorbed. Here, an evaluation was made of the damping performance of the cylindrical plug constituted by the vibration damping member by an intercept load (yield load) Qd (a value calculated from Formula: Qd = (Qd1 + |Qd2|) / 2 by using horizontal loads Qd1 and |Qd2| at a point of intersection of the hysteresis curve with the ordinate axis Q) in the horizontal shear deformation, i.e., ±100% shear strain (the greater the intercept load Qd, the wider the area of the region surrounded by the hysteresis curve, which shows that the more the damping performance excels).

In addition, with respect to the characteristics of the bearing pressure dependence of the seismic isolation apparatus, an evaluation was made from the following test and test results.

### <Bearing Pressure Dependence>

The vertical bearing pressure (vertical pressure) P of 5 MPa, 10 MPa, 15 MPa, and 20 MPa mentioned earlier was respectively applied to the seismic isolation apparatus to determine the intercept load Qd at each vertical bearing pressure P, the change of the intercept load Qd due to each vertical bearing pressure P of 10 MPa, 15 MPa, and 20 MPa was calculated by a radio (multiplying factor) with the intercept load Qd at the vertical bearing pressure of 5 MPa set as 1.00, and the bearing pressure dependence was evaluated by this ratio. The seismic isolation apparatus in which this ratio increases with an increase in the vertical bearing pressure P generates an intercept load Qd corresponding to the vertical bearing pressure P, and has the characteristic of being able to exhibit a vibration isolating effect corresponding to structures different in the load which is supported.

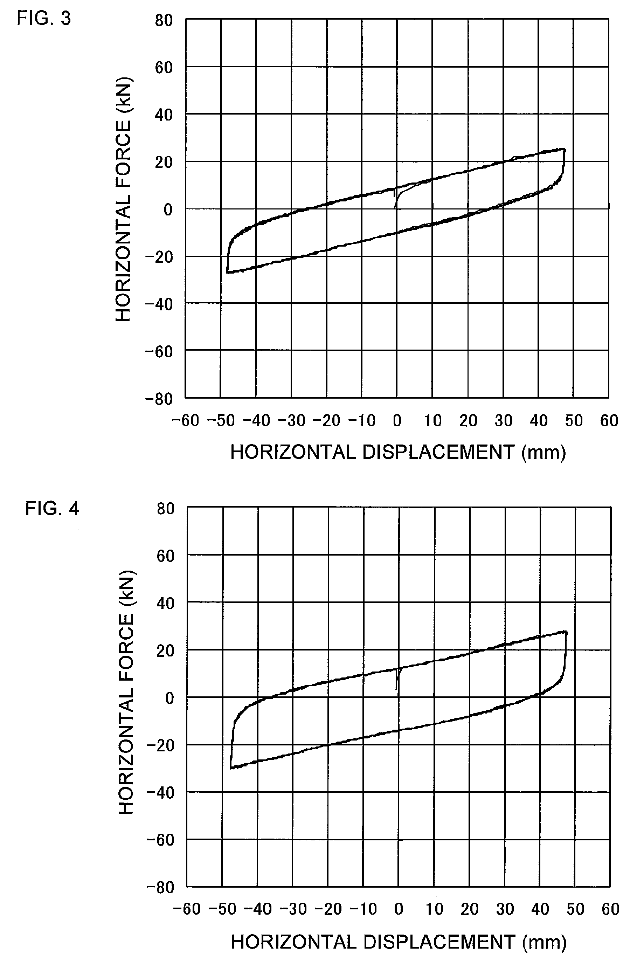

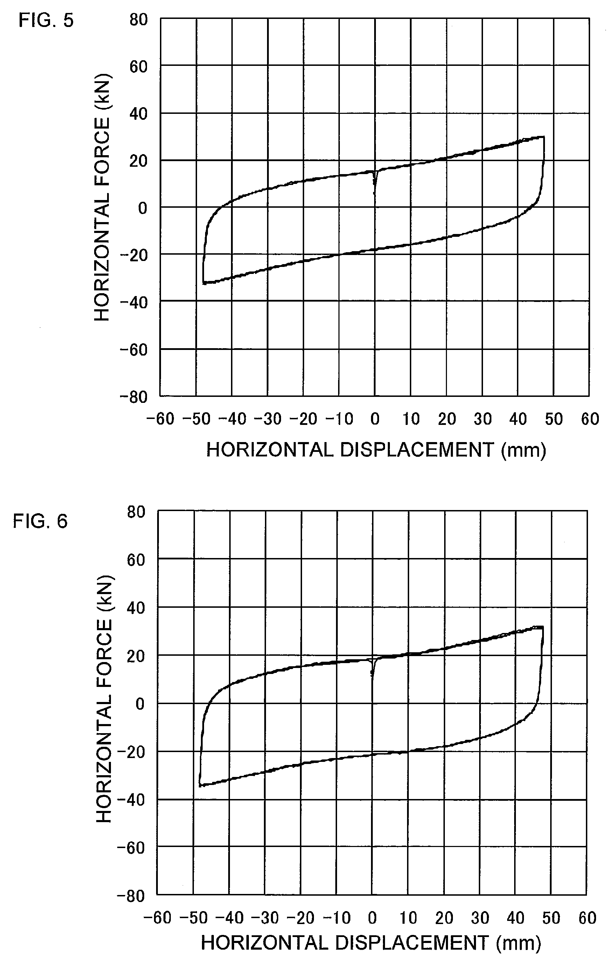

As can be appreciated from Tables 1 and 2, which illustrate test results on bearing surface dependence, with the seismic isolation apparatuses in which the respective cylindrical plug having the component composition shown in Tables 1 and 2 was press-fitted, the intercept load Qd increased with an increase in the vertical bearing pressure P, specifically such that the ratio between the intercept load Q at each vertical bearing surface P and the intercept load at the vertical bearing pressure of 5 MPa was 1.22 to 1.42 at 10 MPa, i.e., two times the vertical bearing pressure P of 5 MPa, was 1.41 to 1.84 at 15 MPa, i.e., three times the vertical bearing pressure P of 5 MPa, and was 1.58 to 2.26 at 20 MPa, i.e., four times the vertical bearing pressure P of 5 MPa; thus, the value of the intercept load Qd increased in correspondence with the vertical bearing pressure P, making it possible to obtain a vibration isolating effect corresponding to the loading capacity, i.e., the vertical bearing pressure P. Figs. 3 to 6 illustrate test results (hysteresis curves) on the horizontal restoring force characteristics, i.e., the relationship between the horizontal displacement δ (mm) and the horizontal load (horizontal force) Q (kN) in the seismic isolation apparatuses in which the respective cylindrical plug having the component composition shown in Example 13 was press-fitted.

It should be noted that the ratio between the intercept load at the vertical bearing pressure of 5 MPa and the intercept load at each vertical bearing pressure of 10 MPa, 15 MPa, and 20 MPa in a seismic isolation apparatus in which a lead plug was press-fitted as the cylindrical plug was 1.02 at the vertical bearing pressure of 10 MPa, 1.04 at the vertical bearing pressure of 15 MPa, and 1.06 at the vertical bearing pressure of 20 MPa, so that with the seismic isolation apparatus with the lead plug press-fitted therein, even if the load which was supported differed, the intercept load did not practically change, and therefore the seismic isolation apparatus with such a lead plug press-fitted therein is inferior to the seismic isolation apparatuses of the present Examples in the light of the bearing pressure dependence which exhibits the vibration isolating effect corresponding to structures different in the load.

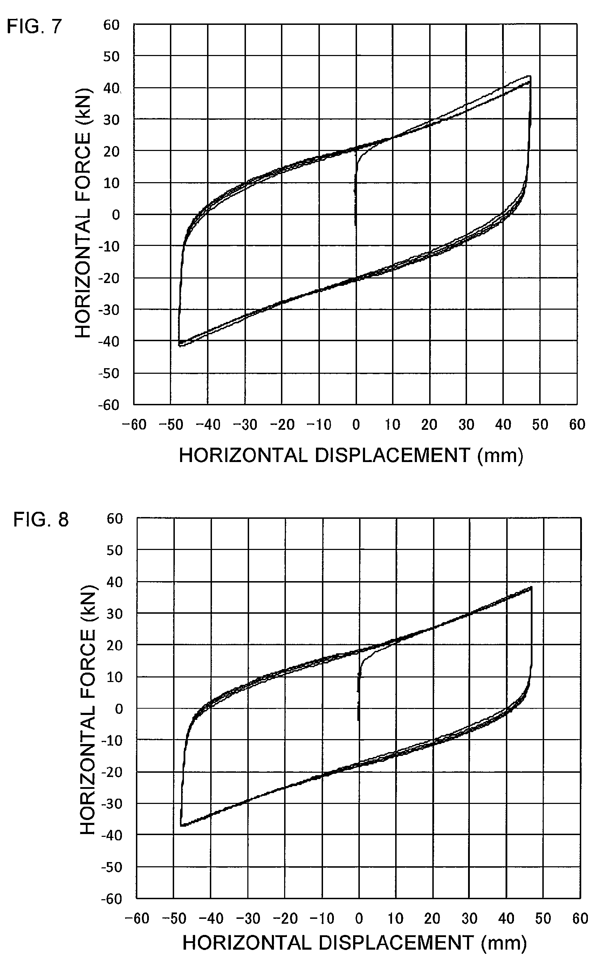

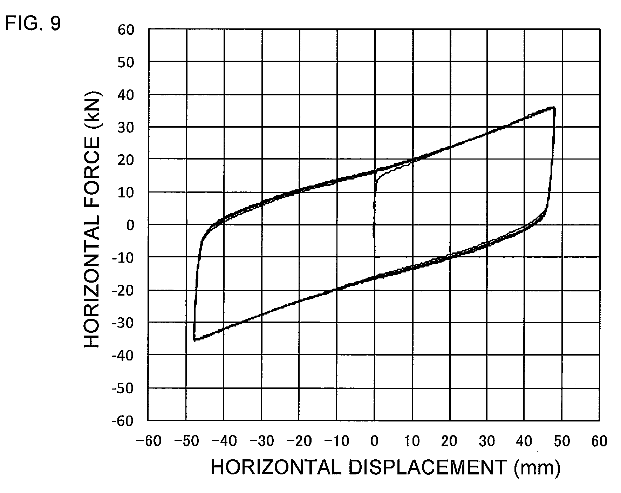

Figs. 7 to 9 illustrate test results (hysteresis curves) on the relationship between the horizontal displacement δ and the horizontal load Q (kN) at 0°C, 20°C, and 40°C in the seismic isolation apparatuses in which the respective cylindrical plug having the component composition shown in Example 13 was press-fitted. From these diagrams, it can be appreciated that the seismic isolation apparatus in accordance with the present Examples has stable temperature dependence.

### DESCRIPTION OF REFERENCE NUMERALS

- 1:: seismic isolation apparatus
- 2:: elastic plate
- 3:: thin-walled rigid steel plate
- 4, 5:: thick-walled rigid steel plate
- 6:: laminated elastic body
- 8:: cylindrical hollow portion
- 9:: cylindrical plug

## Claims

1. A damping material comprising: a thermally conductive filler for damping applied vibrations by mutual friction, a graphite for damping the applied vibrations by friction at least with the thermally conductive filler, and a tuckifier resin, adhesiveness being imparted by the tuckifier resin.

2. The damping material according to claim 1, wherein the graphite has an average particle size exceeding 100 µm.

3. A damping material comprising: a thermally conductive filler, a graphite having an average particle size exceeding 100 µm, and a tuckifier resin.

4. The damping material according to any one of claims 1 to 3, wherein 40 to 70 vol.% of the thermally conductive filler, 10 to 50 vol.% of the graphite, and 10 to 30 vol.% of the tuckifier resin are contained.

5. A damping material comprising: a thermally conductive filler, a graphite, and a tuckifier resin.

6. The damping material according to claim 5, wherein the graphite has an average particle size exceeding 100 µm.

7. The damping material according to claim 5 or 6, wherein 40 to 70 vol.% of the thermally conductive filler, 10 to 50 vol.% of the graphite, and 10 to 30 vol.% of the tuckifier resin are contained.

8. A damping material comprising: 40 to 70 vol.% of a thermally conductive filler, 10 to 50 vol.% of a graphite, and 10 to 30 vol.% of a tuckifier resin.

9. The damping material according to claim 8, wherein the graphite has an average particle size exceeding 100 µm.

10. The damping material according to any one of claims 1 to 9, wherein the graphite is a scaly graphite.

11. The damping material according to any one of claims 1 to 10, further comprising at least one of a vulcanized rubber powder and a crystalline polyester resin.

12. The damping material according to claim 11, wherein at least one of 7 to 30 vol.% of the vulcanized rubber powder and more than 0 vol.% and not more than 20 vol.% of the crystalline polyester resin is comprised.

13. The damping material according to any one of claims 1 to 12, wherein the thermally conductive filler includes one kind or two or more kinds of particles of a metal oxide, a metal nitride, a metal carbide, and a metal hydroxide.

14. The damping material according to any one of claims 1 to 13, wherein the tuckifier resin includes at least one kind selected from among natural resins including a rosin, a rosin-based resin such as a rosin derivative, and a terpene-based resin such as a terpene resin, and synthetic resins including a petroleum resin, a phenolic resin, a coal-based resin, and a terpene-based resin.

15. A vibration damping member having a columnar shape, comprising the damping material according to any one of claims 1 to 14, wherein said vibration damping member is defined by one end face, another end face opposing the one end face, and a side surface bridging the one end face and the other end face, and is adapted to allow relative flexural deformation of the other end face with respect to the one end face in a horizontal direction which is a parallel direction to the one end face, to thereby attenuate the energy of the relative flexural deformation.

16. A seismic isolation apparatus comprising: a laminated elastic body in which rigid material layers having rigidity and elastic material layers having elasticity are alternately laminated, a cylindrical hollow portion defined at least by an inner peripheral surface of said laminated elastic body, and a cylindrical plug press-fitted in said cylindrical hollow portion, wherein said cylindrical plug is formed of the damping material according to any one of claims 1 to 14.

17. The seismic isolation apparatus according to claim 16, wherein said cylindrical plug is adapted to support a load in a laminated direction together with said laminated elastic body.
